# EUROPEAN PATENT APPLICATION

(11) **EP 4 531 304 A1**
(43) Date of publication of application: **02.04.2025**
(21) Application number: 23200484.6
(22) Date of filing: 28.09.2023
(51) Int. Cl.: H04B 10/075, H04B 10/077, H04B 10/079

(54) **METHOD AND APPARATUS FOR DSP-BASED PARAMETER ANALYSIS IN PASSIVE OPTICAL NETWORKS**

(71) Applicant: Nokia Solutions and Networks Oy, 02610 Espoo (FI)
(72) Inventor: FÜLLNER, Christoph, Karlsruhe (DE); BONK, Rene, Pforzheim (DE)
(74) Representative: Zinsinger, Norbert

(57) **Abstract**

Exemplary embodiments relate to a network analyzer (100). The network analyzer (100) comprises means for retrieving histogram values from DSP units (101) of PON transceivers (102) during an operational state of the one or more PON transceivers (102). The network analyzer (100) further comprises means for calculating one or more link quality parameters, means for storing the one or more calculated link quality parameters, means for comparing the one or more calculated link quality parameters with respective one or more previously determined link quality parameters and means for detecting a degradation of one or more of the one or more link quality parameters. Exemplary embodiments relate to an associated method and to an associated computer-readable storage medium.

## Description

### Field

Example embodiments relate to a network analyzer for passive optical networks and the associate method.

### Background

In a PON (Passive Optical Network) damages on fiber plants as well as OLT (Optical Line Terminal) and ONU (Optical Network Unit) transceiver malfunctions and/or performance degradations cause a severe problem for operators and system vendors. Existing network analyzers can monitor and inspect few features of the transceivers, like temperature, drive voltages and output power. However, the existing network analyzers are costly and/or have limited analysing capabilities.

Therefore, there is a need for an improved and more cost-efficient solution for analyzing link quality parameters in PONs.

### Summary

Example embodiments disclose a network analyzer. The network analyzer comprises means for retrieving one or more respective pluralities of histogram values from one or more Digital Signal Processing, DSP, units of respective one or more Passive Optical Network, PON, transceivers during an operational state of the one or more PON transceivers. The network analyzer comprises further means for calculating one or more link quality parameters from respective one or more predefined combinations of the one or more retrieved respective pluralities of histogram values. The network analyzer comprises further means for storing the one or more calculated link quality parameters. The network analyzer comprises further means for comparing the one or more calculated link quality parameters with respective one or more previously determined link quality parameters. The network analyzer comprises further means for detecting a degradation of one or more of the one or more link quality parameters responsive to observing that a respective difference between one or more of the one or more calculated link quality parameters and the respective one or more previously determined link quality parameters drops below a respective predetermined first threshold and/or exceeds a respective predetermined second threshold.

In example embodiments, the network analyzer further comprises means for taking one or more corrective actions responsive to detecting a degradation of one or more of the one or more link quality parameters.

In example embodiments, taking one or more corrective actions comprises determining one or more corrective actions and/or causing one or more elements to implement the one or more corrective actions.

In example embodiments, the means for taking one or more corrective actions is configured to change an observation period responsive to detecting a degradation of one or more of the one or more link quality parameters.

In example embodiments, the means for taking one or more corrective actions is configured to take measures for improving one or more link quality parameters responsive to detecting a degradation of the one or more link quality parameters.

In example embodiments, the means for taking one or more corrective actions is configured to initiate elimination and/or reduction of root causes of degradation of one or more link quality parameters.

In example embodiments, the means for detecting a degradation of the one or more link quality parameters is configured to determine at which component of the PON a root cause for the degradation of the one or more link quality parameters is located with a predefined probability.

In example embodiments, the previously determined link quality parameters are one or more of previously calculated link quality parameters and/or predefined lab parameters.

In example embodiments, the means for storing the one or more calculated link quality parameters is configured to store the one or more calculated link quality parameters in one or more parameter matrices, where for one or more link quality parameter degradations one or more respective potential root causes are indicated.

In example embodiments, the means for storing the one or more calculated link quality parameters is further configured to store the one or more previously determined link quality parameters in further one or more parameter matrices.

In example embodiments, the means for storing the one or more calculated link quality parameters is further configured to store the one or more previously determined link quality parameters in one or more parameter matrices, and wherein a comparison between one or more calculated link quality parameters and one or more corresponding previously determined link quality parameters, respectively, indicates changes of the respective one or more link quality parameters over time.

In example embodiments, the one or more PON transceivers are located at respective one or more Optical Line Terminals, OLTs, and/or at respective one or more Optical Network Units, ONUs.

In example embodiments, the means for calculating one or more link quality parameters is configured to calculate one or more of:
- one or more link quality parameters for one or more OLT-ONU links in the PON downstream direction,
- one or more link quality parameters for one or more ONU-OLT links in the PON upstream direction,
- one or more link quality parameters for one or more OLT ports of one or more linecards of one or more PONs,
- one or more link quality parameters for one or more linecards of one or more chassis;
- one or more of the above link quality parameters for an entire geographical area.

In example embodiments, one or more means of the network analyzer is configured for using cloud technology.

In example embodiments, one or more means of the network analyzer is configured for being implemented in a self-learning manner, in particular by using Artificial Intelligence, AI.

In example embodiments, the network analyzer is implemented centralized at one OLT or at a separate entity.

In example embodiments, the network analyzer is implemented centralized at one linecard or at one chassis.

In example embodiments, the network analyzer is implemented decentralized. A decentralized implementation might be also termed implementation "in a distributed way". In a decentralized implementation, one or more components of the network analyzer are installed at one or more of:
a) one or more OLTs and one or more ONUs; or
b) a separate entity and at least one of the one or more OLTs and one or more ONUs.

In example embodiments of a decentralized implementation, one or more components of the network analyzer are installed at one or more ONUs, and wherein the network analyzer further comprising means for sending one or more link quality parameters calculated at the one or more ONUs towards the means for storing the one or more calculated link quality parameters at one of the one or more OLTs or at the separate entity via one or more Physical Layer Operation Administration and Maintenance, PLOAM, messages.

Example embodiments disclose a method. The method comprises retrieving one or more respective pluralities of histogram values from one or more Digital Signal Processing, DSP, units of respective one or more Passive Optical Network, PON, transceivers. The method further comprises calculating one or more link quality parameters from respective one or more predefined combinations of the one or more retrieved respective pluralities of histogram values. The method further comprises storing the one or more calculated link quality parameters. The method further comprises comparing the one or more calculated link quality parameters with respective one or more previously determined link quality parameters. The method further comprises detecting a degradation of one or more of the one or more link quality parameters responsive to observing that a respective difference between one or more of the one or more calculated link quality parameters and the respective one or more previously determined link quality parameters drops below a respective predetermined first threshold and/or exceeds a respective predetermined second threshold.

### Brief description of Figures

Example embodiments are described with references to the Figures, wherein
- FIG. 1: illustrates a network analyzer and further elements according to exemplary embodiments
- FIG. 2: illustrates a parameter matrix according to exemplary embodiments
- FIG. 3: illustrates a diagram used for determining a link quality parameter degradation according to exemplary embodiments
- FIG. 4: illustrates a plurality of parameter matrices according to exemplary embodiments
- FIG. 5: illustrates a PON where features of a network analyzer and method according to exemplary embodiments are implemented
- FIG. 6: illustrates a flow chart of a method according to exemplary embodiments

### Detailed description

Exemplary embodiments are described in more detail. These are meant for illustrative reasons and not to limit the subject-matter for which protection is sought which is defined solely by the claims. Like numbers refer to like elements throughout the description of the figures. As discussed herein, the terminology "one or more" and "at least one" may be used interchangeably. It will be appreciated that a number of example embodiments may be used in combination.

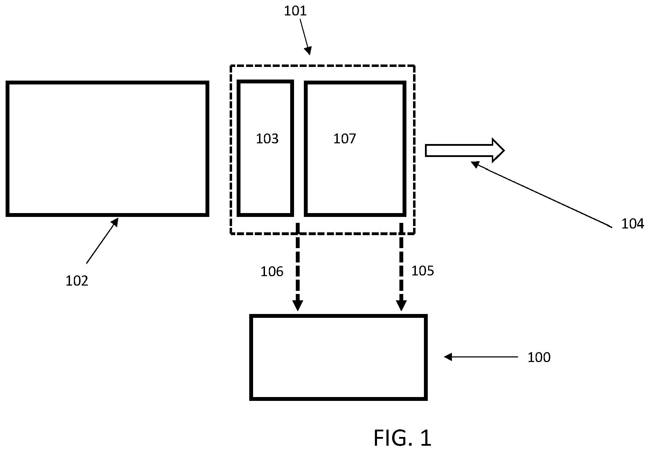

FIG. 1 shows a network analyzer 100 which comprises means for retrieving one or more respective pluralities of histogram values from one or more Digital Signal Processing, DSP, units 101 of respective one or more Passive Optical Network, PON, transceivers 102 during an operational state of the one or more PON transceivers 102. Illustratively, a DSP unit 101 comprises a DSP equalizer 107 and an Analogue-to-Digital Converter ADC 103. In addition to the network analyzer 100, for illustrative reasons one PON transceiver 102 which is equipped with or connected to one DSP unit 101 is shown.

Arrow 104 symbolizes the data path of the data which has been received by the PON transceiver 102 and processed by the DSP unit 101 and which is forwarded as a stream of user data or further data to convey information or any other content. In other words, the PON transceiver 102 is in operational state, while a plurality of histogram values is retrieved by the network analyzer 100 from the DSP unit 101. In other words, the PON transceiver 102 is actually receiving user data or further data, e.g., control data, at the moment when the network analyzer 100 retrieves a plurality of histogram values from the DSP unit 101. It is noted that the expression "retrieving during an operation state" may also be phrased "retrieving in-vivo" or "fetching in-vivo". Thus, the sentence "the network analyzer 100 retrieves a respective plurality of histogram values from one or more DSP units 101 of respective one or more PON transceivers 102 during an operation state of the one or more PON transceivers 102" might also be worded "the network analyzer 100 fetches (or retrieves) in-vivo a respective plurality of histogram values from one or more DSP units 101 of respective one or more PON transceivers 102".

In the described example, the histogram values contain samples of the signal waveform (of the signal received by the PON transceiver 102). The samples may be taken from the output of the DSP unit 101, in particular from the output of the DSP equalizer 107 which is part of the DSP unit 101. Alternatively, the samples may be taken from an intermediate drop of the DSP unit 101. The samples may be equalized samples. However, the samples may be still undecided samples, this means it is not yet decided whether a taken samples is regarded to represent an "0"-value or an "1"-value. The taken samples may form a histogram of values. Therefore, herein, the expression "retrieving histogram values" is used which relates thus to the samples taken from the DSP unit 101.

In FIG. 1 the arrow 105 symbolizes the retrieving of the histogram values from the output of the DSP equalizer 107 (thus at the output of the DSP unit 101). Alternatively or in addition to retrieving the histogram values from the output of the DSP equalizer 107, the histogram values might be taken in front of the DSP equalizer 107 after digitalization of the signal waveform by an analogue-to-digital converter, ADC. The expression "in front of the DSP equalizer 107" refers to the direction of the signal processing of data from the PON transceiver 102 to the DSP equalizer 107. In FIG. 1 between the PON transceiver 102 and the DSP equalizer 107 an analogue-to-digital converter, ADC, 103 is depicted. The ADC 103 and the DSP equalizer 107 form part of the DSP unit 101. Arrow 106 symbolizes the retrieving of the histogram values in front of the DSP equalizer 107, after digitalization of the signal waveform by ADC 103.

Therefore, the expression "retrieving histogram values from a DSP unit 101" encompasses the alternatives that the histogram values are retrieved at the output of the DSP unit 101 (thus at the output of the DSP equalizer 107) or at an intermediate drop of the DSP unit 101, thus in front of the DSP equalizer 107, thus at the output of the ADC 103. Therefore, possibly, alternatively to the expression "retrieving histogram values from a DSP unit, the expression "retrieving histogram values at a DSP unit" could be used.

It is noted that in case the histogram values are retrieved at the output of the ADC 103, an equalization step may be applied.

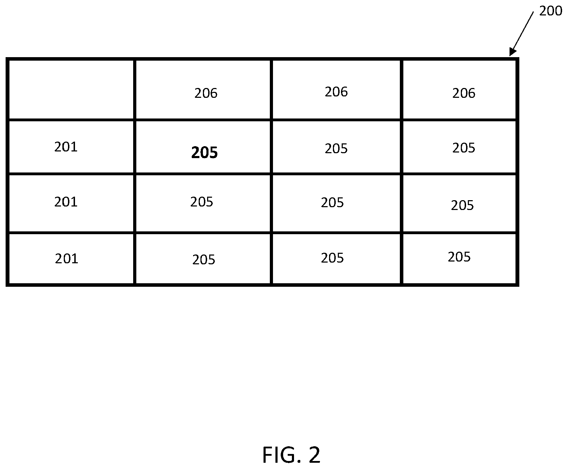

The network analyzer 100 further comprises means for calculating one or more link quality parameters 201 from respective one or more predefined combinations of the one or more retrieved respective pluralities of histogram values (the reference sign 201 refers to FIG. 2 which will be described below). After retrieving the histogram values, the network analyzer 100 calculates one or more link quality parameters 201 by combining histogram values. A predefined combination may be a formula, in particular a mathematical formula. Before applying these formulas (predefined combinations), statistics might be used to determine, for example, the average one level voltage ("P1"), the average zero level voltage ("P0"), as well as the corresponding distribution width from the histogram values. Further, in exemplary embodiments, the "sigma 1" and "sigma 0" levels may be determined. Further, the formulas (predefined combinations) are applied. Exemplarily, the following link quality parameters 201 may be calculated by applying predefined combinations (formulas) and using these inputs:
An "effective" extinction ratio, ER: "effective" ER = P1/P0 (in words: "P1 divided by P0"). In this example, the predefined combination (formula) is P1/P0; and the calculated link quality parameter is the "effective" ER. It is noted that the extinction ratio similarly as the following/further link quality parameters are denoted "effective", because they are not based on exact determination based on high-cost high-processing signal analyzers, but by using the herein described method which is more cost-efficient, but nevertheless achieves satisfying results. However, the feature "effective" could be omitted, because and if it clear from the context that the calculated link quality parameters are based on the implementations (determined inputs, calculations etc.) described herein.

Further, an "effective" optical modulation amplitude, OMA: effective OMA = P1-P0 (in words: "P1 minus PC") may be calculated. Further, an effective transmitter and dispersion eye closure, TDEC, may be calculated. The "effective" TDEC depends on OMA, ER, BER (Bit-Error-Rate)-threshold, and EQ (=Equalizer) noise from EQ taps, wherein the noise statistics are assumed to be Gaussian. Further, an effective Qfactor = P1-P0 / sigma 1 + sigma 0 (in words: "(P1 minus PC) divided by (sigma 1 plus sigma 0)) might be calculated.

It is noted that in some exemplary embodiments, the calculation of a link quality parameter relies on the combination of the retrieved histogram values with additional information, e.g., for the "effective" TDEC calculation for which the equalizer taps should be accessible.

The network analyzer 100 comprises means for storing the one or more calculated link quality parameters 201. Therefore, the network analyzer 100 may comprise a storage medium or be connected to a storage medium (not depicted). In exemplary embodiments, the means for storing the one or more calculated link quality parameters 201 may be configured to store the one or more calculated link quality parameters 201 in one or more parameter matrices 200.

FIG. 2 depicts an exemplary parameter matrix 200. In the first column (numbering from left to right), link quality parameters 201 are indicated. For example, in the first filled-out row (second row from above) of the first column, an effective ER may be indicated (not explicitly specified in FIG. 2), in the second filled-out row (third row from above) of the first column, an effective OMA may be indicated, and in the third filled-out row (fourth row from above) of the first column, an effective TDEC may be indicated. Further, in the first row (starting from the second column from left to right), components 206 of a PON might be indicated. The entries of the components 206 in the matrix 200 indicate at which component of the PON a degradation of a link quality parameter 201 might be assumed. For example, in the first-filled out column (second column from left to right) of the first row a specified transmitter of a particular transceiver may be indicated (not explicitly specified in FIG. 2), in the second-filled out column (third column from left) of the first row a specified receiver of a particular transceiver may be indicated, and in the third-filled out column (fourth column from left) of the first row, a specified ODN may be indicated. Further, for each combination of a link quality parameter 201 degradation and a component 206, a potential root cause 205 is indicated in the matrix 200. Thus, in the matrix 200, for one or more link quality parameter degradations one or more respective potential root causes 205 are indicated.

For example, for the link quality parameter ER in the second row of the first column in combination with the component 206 of the specified transmitter in the second column of the first row, a potential root cause 205 in the second column of the second row is indicated (and highlighted by dense letters in the matrix 200 for illustrative reasons). For example, in case a degradation of the ER is determined, it might be assumed that the root cause 205 (thus the reason for this degradation) could be located at this specified transmitter 206 in the second column, and under this assumption the root cause 205 for this link parameter degradation is more specified in the field 205 (here the highlighted field with bold letters **205**). For example, the root cause 205 may be (and is indicated in this field **205**) that the output power or the EAM bias or the EAM drive voltage have not the necessary strength or magnitude, so that the ER is not good enough. Thus, in this example, the determined degradation of the ER is assumed to be caused by e.g., a too low EAM bias of said particular transmitter.

Further potential root causes 205 for said transmitter (component 206) might be BWchanges (V, I, T) for degradations of (link quality parameter 201) RxEQ taps; Instability of operation point dependencies for degradations of FEC; output power (EAM bias) for degradations of TRx power. Further in regard of the third column (thus for the component 206 of a specified receiver), the root causes 205 for degradation of link quality parameter eTDEC might be BWchanges (V, I, T), for degradation of link quality parameter Rx EQtaps might be RWchanges (V, I, T), for degradation of link quality parameter FEC might be RxEQ burst error, for degradation of link quality parameter TRxpower might be received power. Further in regard of the fourth column (thus for the component 206 of the specified ODN), the root causes 205 for degradation of link quality parameter eTDEC might be chromatic dispersion, for degradation of link quality parameter RxEQtaps might be chromatic dispersion, for degradation of link quality parameter FEC might be Pol-mode dispersion, for degradation of TRxpower might be attenuation. The root causes 205 are indicated in the fields of the matrix 200 where an imaginary line to the left from the respective field of the indicated degradation of link quality parameter 201 and an imaginary line downwards from the particular component 206 cross at a particular entry/field 205 as described above for the example of the degradation of the ER link quality parameter 201 of the specified transmitter component 206 and its associated root cause **205.** It is noted that the particular entries for the fields 201, 205 and 206 are not specified in matrix 200 in order not to overload the presentation.

After having described how potential root causes 205 for link parameter degradations of particular components 206 are indicated in the matrix 200, in the following, it should be described in more detail, how the network analyzer 100 determines link quality parameters degradations. The network analyzer 100 comprises means for comparing the one or more calculated link quality parameters 201 with respective one or more previously determined link quality parameters 201. The previously determined link quality parameters 201 might be one or more of previously calculated link quality parameters 201 and/or predefined lab parameters.

For example, a previously determined link quality parameter 201 might be a previously calculated link quality parameter 201. In this example, the network analyzer 100 compares the calculated link quality parameter 201, e.g., a calculated ER, with a previously calculated link quality parameter 201, e.g., in this example with a previously calculated ER, or in a further example, a calculated TDEC with a previously calculated TDEC.

Alternatively, or in addition, a previously determined link quality parameter 201 might be a predefined lab (= laboratory) parameter. For example, a particular link quality parameter, e.g., an ER, might be taken (or measured) from a calibrated component, e.g., a calibrated transmitter, and used as predefined lab parameter for the ER. In this example, a calculated link quality parameter 201 ER (calculated from histogram values) is compared with the predefined lab parameter, here for example the ER, for said transmitter. Thus, a comparison is made between a calculated link quality parameter 201 and a predefined lab parameter.

Depending on this comparison, it is determined whether a degradation of the link quality parameter 201 has occurred. For this reason, the network analyzer 100 comprises means for detecting a degradation of one or more of the one or more link quality parameters 201 responsive to observing that a respective difference 202 between one or more of the one or more calculated link quality parameters 201 and the respective one or more previously determined link quality parameters 201 drops below a respective predetermined first threshold 203 and/or exceeds a respective predetermined second threshold. To be more specific, in exemplary embodiments, a degradation of a particular link quality parameter 201 is detected responsive to observing that the aforementioned determined difference drops below a first threshold. In other embodiments, a degradation of a particular link quality parameter 201 is detected responsive to observing that the aforementioned determined difference exceeds a second threshold. In further embodiments, a degradation of a particular link quality parameter 201 is detected responsive to observing that the aforementioned determined difference drops below a first threshold and responsive to observing that the aforementioned determined difference exceeds a second threshold. In further embodiments, a degradation of a particular link quality parameter 201 is detected responsive to observing that the aforementioned determined difference drops below a first threshold or responsive to observing that the aforementioned determined difference exceeds a second threshold. The first threshold (and similarly the second threshold) might be based on considerations such as network stability, quality-to-cost-ratio, technical prerequisites etc. The first threshold (and similarly the second threshold) might be predefined or predetermined for example by a network operator, a network tenant, a content provider, a network provider or any combination of one or more of these (or possibly other) persons or entities.

Thus, due to the comparison of the calculated link quality parameter 201 with the respective previously determined link quality parameter 201, the network analyzer 100 determines the difference 202 between the calculated link quality parameter 201 and the previously determined link quality parameter 201. This difference 202 might be observed over a certain time period, which might be termed "observation time". To determine this difference 202 continuously (or repetitively), the calculated link quality parameter 201 is calculated continuously (or repetitively) based on continuously (or repetitively) retrieved histogram values.

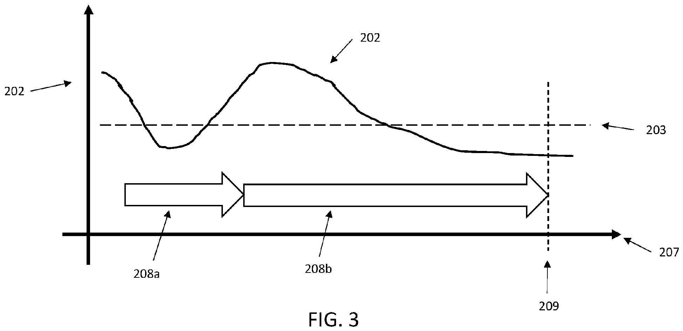

FIG. 3 shows an example of a difference 202 between a particular calculated link quality parameter 201, e.g., calculated ER, and the respective previously determined link quality parameter 201, e.g., previously calculated ER, and how said difference 202 fluctuates over time, wherein the x-(horizontal) axis indicates the time 207 and the y-(vertical) axis indicates the difference 202.

Further, in the diagram of FIG. 3 a first threshold 203 is indicated. In this example, the difference 202 is at the beginning of the depicted time period above the first threshold 203, then drops below the first threshold 203, raises again above the first threshold 203, and then drops and remains below the first threshold 203.

In this example, a drop of the difference 202 below the first threshold 203 indicates a degradation of the respective link quality parameter 201. In other exemplary embodiments, the definition of a degradation of a link quality parameter 201 might be such that exceeding a second threshold by the difference (not depicted in FIG. 3) is a degradation of said link quality parameter, this means a degradation in the latter case is determined in case a difference of a calculated link quality parameter with a previously determined link quality parameter exceeds a second threshold.

In exemplary embodiments, for comparing calculated link quality parameters 201 with previously determined link quality parameters 201, a plurality of parameter matrices 200 may be provided.

In example embodiments, the means for storing the one or more calculated link quality parameters 201 is further configured to store the one or more previously determined link quality parameters 201 in further one or more parameter matrices.

In example embodiments, the means for storing the one or more calculated link quality parameters 201 is further configured to store the one or more previously determined link quality parameters 201 in further one or more parameter matrices. In exemplary embodiments, a comparison between one or more calculated link quality parameters 201 and one or more corresponding previously determined link quality parameters 201, respectively, indicates changes of the respective one or more link quality parameters 201 over time.

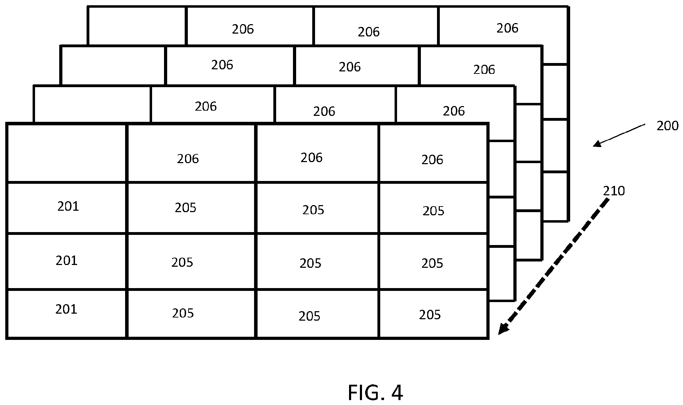

FIG. 4 depicts such a plurality of parameter matrices 200. In the upper parameter matrix 200 (which is depicted in full view), currently calculated link quality parameters 201 might be stored. Further, as described above, the parameter matrix 200 indicates the potential root causes 205 for degradations of these link quality parameters 201 and at which component 206 the root cause 205 is situated with a predefined probability. Thus, the upper parameter matrix 200 in FIG. 4 might correspond to (or at least might be similarly structured as) the parameter matrix 200 described with reference to FIG. 2.

Further, in FIG. 4, in the parameter matrices 200 which are behind the upper parameter matrix 200 and which are therefore mostly covered (for the most of their size) the previously determined link quality parameters 201 might be stored, and further the potential root causes 205 for respective link quality parameter degradations and the component(s) 206 where the root cause(s) is (are) assumed to be located. In FIG. 4., in the parameter matrices 200 behind the upper parameter matrix 200 the entries of the components 206 are depicted, however the entries of the potential root causes 205 (although present) cannot be seen, because they are covered by the upper parameter matrix 200. Thus, the covered parameter matrices 200 have been established previously based on previously determined link quality parameters 201, wherein for example a parameter matrix 200 which is depicted even more in the rear of the presentation might comprise the entries resulting from even more previously determined link quality parameters 201. In other words, the more the parameter matrix 200 lays in the rear part of the presentation, the older the parameter matrix 200 is, thus results from (or includes) even more previously determined entries.

Based on this illustrative implementation, the network analyzer 100 has the means for storing the one or more previously determined link quality parameters 201 in one or more parameter matrices 200, and wherein a comparison between one or more calculated link quality parameters 201 and one or more corresponding previously determined link quality parameters 201, respectively, indicates changes of the respective one or more link quality parameters 201 over time.

For example, after having established at least two parameter matrices 200, the entry of a particular link quality parameter 201 in the newer (upper in FIG. 4) parameter matrix 200 can be compared with the entry of the respective link quality parameter 201 in an older parameter matrix 200, and thus a difference 202 between the calculated link quality parameter 201 and a previously calculated link quality parameter 201 can be determined. Therefore, this comparison indicates a change of the respective link quality parameter 201 over time. In case of more than two corresponding parameter matrices 200, this change is indicated over time based on the entries of the respective link quality parameter 201 throughout the parameter matrices 200, thus from the oldest to the newest, through the timely consecutively provided parameter matrices 200.

In FIG. 4, the arrow 210 lays parallel to the parameter matrices 200, wherein the tail of the arrow 210 is at the oldest parameter matrix 200 and the head of the arrow 210 is beside the newest parameter matrix 200, thus arrow 210 lays parallel to the parameter matrices 200, from the oldest parameter matrix 200 through the timely subsequent parameter matrices 200 to the newest parameter matrix 200, wherein the feature "new" and "old(er)" in regard to the parameter matrices 200 refers to when the entries in the respective parameter matrix 200 have been made. Thus, this afore-mentioned comparison can be made for one or more respective link quality parameters 201 via the at least two or more than two parameter matrices 200 and the corresponding entries of the one or more determined link quality parameters 201.

Alternatively, or in addition, previously determined link quality parameters 201 might be predefined lab (= laboratory) parameters. In exemplary embodiments, the oldest parameter matrix 200 might include the entries of the predefined lab parameters for the corresponding link quality parameters 201. In this case, a comparison of a calculated link quality parameter 201 with its corresponding predefined lab parameter can be made, in particular in addition to the comparison of the respective calculated link quality parameter 201 over time through the timely consecutively established parameter matrices 200.

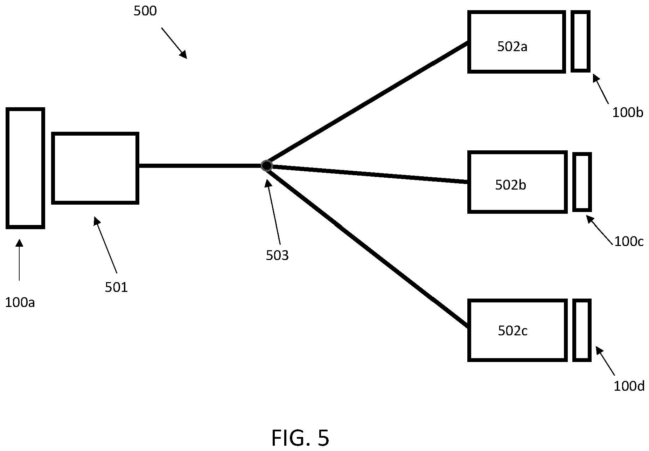

FIG. 5 shows an exemplary implementation of a PON 500, where an Optical Line Terminal, OLT, 501 is connected via a splitter 503 to one or more Optical Network Units, ONUs, 502, wherein for illustrative reasons in FIG. 5 three ONUs, namely ONU 502a, ONU 502b and ONU 502c, collectively referred to as ONUs 502, are depicted.

In exemplary embodiments, the one or more PON transceivers 102 from which the histogram values are retrieved might be located at one or more Optical Line Terminals, OLTs, and/or at respective one or more Optical Network Units, ONUs 502. Further, in exemplary embodiments, the network analyzer 100 may be implemented centralized at one OLT 501. In alternative exemplary embodiments, the network analyzer 100 may be implemented at a separate entity (not depicted in FIG. 5). In exemplary embodiments, the network analyzer 100 is implemented at a linecard or at a chassis (not depicted in FIG. 5).

In exemplary embodiment, the network analyzer 100 is implemented decentralized, in other words the network analyzer 100 is implemented in a distributed way. In this case, one or more components of the network analyzer 100 are installed either at one or more OLTs 501 and one or more ONUs 502; or (one or more components of the network analyzer 100 are installed) at a separate entity and at least one of the one or more OLTs 501 and one or more ONUs 502. Further, in exemplary embodiments, one or more components of the network analyzer 100 are implemented at one or more linecards and/or at one or more chassis or shelves.

In exemplary embodiments, link quality parameters 201 are calculated by components of the network analyzer 100 installed at one or more ONUs 502. The link quality parameters 201 calculated at the components installed at one or more ONUs 502 might be sent to the components of the network analyzer 100 installed at one or more OLTs 501 or, in case the network analyzer 100 is installed at a central entity, to the central entity. The link quality parameters 201 calculated by components installed at the one or more ONUs 502 might be sent via one or more Physical Layer Operation Administration and Maintenance, PLOAM, messages.

Thus, in exemplary embodiments, one or more components of the network analyzer 100 are installed at one or more ONUs 502, and the network analyzer 100 comprises means for sending one or more link quality parameters 201 calculated at the one or more ONUs 502 towards the means for storing the one or more calculated link quality parameters 201 at one of the one or more OLTs 501 or at the separate entity, e.g., via one or more Physical Layer Operation Administration and Maintenance, PLOAM, messages. It is noted that, since a PLOAM message is always sent from an ONU to an OLT, the feature "towards the means for storing the one or more calculated link quality parameters at one of the one or more OLTs or at the separate entity" means that if the storing is located at the OLT it is towards the OLT and if the storing is at a central entity it is towards the central entity, but via the OLT. Thus, in exemplary embodiments, the means for storing the one or more link quality parameters 201 is located at one or more OLTs 501, and the link quality parameters 201 calculated at one or more ONUs 502 are sent to the one or more OLTs 501. Alternatively, the means for storing the one or more link quality parameters 201 is located at a central entity, and the link quality parameters 201 calculated at one or more ONUs 502 are sent via the OLT 501 to the central entity.

In exemplary embodiments, the means for calculating one or more link quality parameters 201 is configured to calculate one or more link quality parameters 201 for one or more OLT-ONU links in the PON downstream direction. In exemplary embodiments, the means for calculating one or more link quality parameters 201 is configured to calculate one or more link quality parameters 201 for one or more ONU-OLT links in the PON upstream direction. In exemplary embodiments, the means for calculating one or more link quality parameters 201 is configured to calculate one or more link quality parameters 201 for one or more OLT ports of one or more linecards of one or more PONs 500. In exemplary embodiments, the means for calculating one or more link quality parameters 201 is configured to calculate one or more link quality parameters 201 for one or more linecards.

In exemplary embodiments, the means for calculating one or more link quality parameters 201 is configured to calculate one or more link quality parameters 201 for one or more linecards of one or more chassis. In exemplary embodiments, the means for calculating one or more link quality parameters 201 is configured to calculate one or more link quality parameters 201 for one or more racks. In exemplary embodiments, the means for calculating one or more link quality parameters 201 is configured to calculate one or more link quality parameters 201 for an entire geographical area.

In exemplary embodiments, one or more means of the network analyzer 100 is configured to use cloud technology. In exemplary embodiments, the one or more means of the network analyzer 100 is configured to be implemented in a self-learning manner, in particular by using Artificial Intelligence, AI.

In the exemplary embodiment depicted in FIG. 5, histogram values are retrieved from PON transceivers 102 located at the ONUs 502a, 502 b and 502 c and further from PON transceivers 102 located at the OLT 501. Further, in FIG. 5, the network analyzer 100 is implemented in a distributed way ("decentralized"), wherein component 100a of the network analyzer 100 is installed at the OLT 501, component 100b of the network analyzer 100 is installed at the ONU 502a, component 100c of the network analyzer 100 is installed at the ONU 502b, and component 100d of the network analyzer 100 is installed at the ONU 502c.

In the exemplary embodiment of FIG. 5, the component 100a retrieves a plurality of histogram values from the PON transceiver 102 located at OLT 501, more specifically at the DSP unit 101 of the PON transceiver 102 located at OLT 501. Similarly, component 100b retrieves a plurality of histogram values from the DSP unit 101 of the PON transceiver 102 located at ONU 502a. Similarly, component 100c retrieves a plurality of histogram values from the DSP unit 101 of the PON transceiver 102 located at ONU 502b. Similarly, component 100d retrieves a plurality of histogram values from the DSP unit 101 of the PON transceiver 102 located at ONU 502c.

In a first variant of the exemplary embodiment of FIG. 5, the component 100a of the network analyzer 100 located at OLT 501 receives the histogram values from components 100b, 100c and 100d, and thus implicitly (or indirectly) from the DSP units101 of the PON transceivers 102 of ONUs 502a, 502b, 502c. Then the network analyzer 100, more specifically component 100a of the network analyzer 100 located at OLT 501, calculates one or more (here a respective plurality of link quality parameters 201) from the received (or retrieved) histogram values.

In a second variant of the exemplary embodiment of FIG. 5, after retrieving the histogram values from the DSP units 101 of the PON transceivers 102, components 100b, 100c and 100d (themselves) calculate the respective pluralities of link quality parameters 201 based on the retrieved histogram values. The components 100b, 100c and 100d send the calculated link quality parameters 201 to the component 100a of the network analyzer 100.

In the exemplary embodiment of FIG. 5, after having calculated the link quality parameters 201 in the first variant or after having received the calculated link quality parameters 201 in the second variant, the component 100a of the network analyzer 100 stores the calculated link quality parameters 201, for example in the one or more parameter matrices 200 (for example as described above).

Alternatively, or in combination, in a further variant of the exemplary embodiment described with reference to FIG. 5, the component 100a located at the OLT 501 might also retrieve a plurality of histogram values from the DSP unit 101 of the PON transceiver 102 located at OLT 501. Then, component 100a calculates one or more link quality parameters 201 based on these histogram values.

After having stored the calculated link quality parameters 201 in one or more, here for example a plurality of parameter matrices 200, component 100a determines degradations of the one or more link quality parameters 201.

As described above, degradations of link quality parameters 201 are determined based on determining whether a difference between a particular link quality parameter 201 and a corresponding (respective) previously determined link quality parameter 201 drops below a first predefined threshold (or in other exemplary embodiments, exceeds a second predefined threshold). For example, component 100a might determine, if the difference between the calculated extinction ratio and a previously determined extinction ratio drops below a predefined first threshold. If this is the case, then a degradation of the extinction ratio is determined. Similarly, component 100a determines degradations of one or more further link quality parameters 201.

In exemplary embodiments, after having detected a degradation of the one or more link quality parameters 201 the network analyzer 100 determines at which component 206 of the PON 500 a root cause 205 for the degradation of the one or more link quality parameters 201 is located with a predefined probability (wherein said probability may be predefined by e.g., a network operator, a network tenant, a content provider, a network provider, etc.).

In the following, it will be described, how the network analyzer 100 (e.g., more specifically the component 100a of the network analyzer 100) located at the OLT 501, determines, at which component 206 of the PON 500, a root cause 500 for the degradation of one or more link quality parameters 201 is located with a predefined probability.

In an exemplary embodiment described with reference to FIG. 5, the network analyzer 100 determines link quality parameter degradations in regard of the link quality parameter ER, OMA, Ceq (wherein the Ceq value represents the equalizable penalty on a data sequence by the use of an equalizer) and TDEC. More specifically, the network analyzer 100 determines, whether a respective degradation of the link quality parameters ER, OMA, Ceq and TDEC has occurred at ONU 502a, whether a respective degradation of the link quality parameters ER, OMA, Ceq and TDEC has occurred at ONU 502b, and whether a respective degradation of the link quality parameters ER, OMA, Ceq and TDEC has occurred at ONU 502c.

In a first scenario, the network analyzer 100 detects that a respective degradation of the link quality parameters 201 ER and TDEC has occurred at ONU 502a, at ONU 502b and at ONU 502c, while there is no degradation of the link quality parameters 201 OMA and Ceq at ONU 502a, ONU 502b or ONU 502c. Thus, the network analyzer 100 determines that a respective degradation of the (one or more, here two) same link quality parameters 201 has occurred at any of the at least two (here three) ONUs 502. Therefore, it is determined with a predefined (here high) probability that the root cause 500 for the link quality parameter degradations is located either at the OLT 501 or the ODN feeder section. This is, because it is unlikely that each of the plurality of ONUs 502 has the same technical problem or defect which would cause the same link quality parameter degradation(s). Rather, it is likely that the root cause 500 for the same link quality parameter degradation(s) which are detected similarly at any ONU 502 of the ONU side is caused by one or more defect components on the OLT side or ODN section, because a failure cause situated at the OLT side or at the ODN section effects all ONUs in the same way, since all ONUs receive the signal (or data) from the OLT via the ODN (Optical Distribution Network) section. Thus, a signal worsened at the OLT 501 appears at each ONU 502 affected with the same defect and thus is similarly deficient, thus has the similar degradation in regard of the same respective link quality parameter 201. In other words, a defect located at the OLT 201 which affects (= here causes a degradation of) a particular link quality parameter (e.g., ER) 201 at ONU 502a affects said same particular link quality parameter (ER) similarly at ONU 502b and at ONU 502c.

In a second scenario, the network analyzer 100 detects a respective degradation of the link quality parameters 201 OMA, Ceq and TDEC at ONU 502a (while the ER at ONU 502a is not affected, i.e., does not show any link quality parameter degradation), whereas at ONU 502b and ONU 502c, none of the link quality parameters 201 including OMA, Ceq and TDEC show any degradation. Thus, in other words, the network analyzer 100 detects a degradation of one or more link quality parameters 201 at one of the ONUs 502, whereas there is no degradation of said same one or more link quality parameters 201 at any of the further ONUs 502. In this case, it can be determined with a predefined (here even high) probability that the root cause 500 for the link quality parameter degradation is situated at the ONU side (more specifically at the ONU 502 where the degradation of the one or more link quality parameters 201 is detected) or at the ODN drop section (or the splitter 503). This is, if a link quality parameter degradation is detected at only one of the ONUs 502 (and not at the other ONUs 502), then it is likely that said ONU 502 is defect, and since the other ONUs 502 are not defect (thus, do not show any degradation), it can be concluded that these other ONUs 502 and the OLT 501 work properly.

In exemplary embodiments, the network analyzer 100 further comprises means for taking one or more corrective actions responsive to detecting a degradation of one or more of the one or more link quality parameters 201. Taking one or more corrective actions may comprise determining one or more corrective actions. Taking one or more corrective actions may comprise implementing one or more corrective actions. Taking one or more corrective actions may comprise causing one or more elements to implement the one or more corrective actions.

In exemplary embodiments, responsive to detecting a degradation of one or more of the one or more link quality parameters 201 the network analyzer 100 may determine one or more correction actions. For example, the network analyzer 100 may draw a conclusion on the necessary action or countermeasures to take. Further, the network analyzer 100 may announce the required changes to the TRx (transceiver) engines. For example, the network analyzer 100 initiates an increase in electrical swing to be executed by the driver inside the TRx module, thus the network analyzer 100 causes the driver inside the TRx module to implement the corrective action of increasing the electrical swing).

In exemplary embodiments, responsive to detecting a degradation of one or more of the one or more link quality parameters 201, the network analyzer 100 may implement one or more corrective actions. For example, the network analyzer 100 may change an observation period responsive to detecting a degradation of one or more of the one or more link quality parameters 201. For example, looking back at FIG. 3, in a first observation period 208a, it has been determined that a difference 202 between a calculated link quality parameter 201 and a previously determined link quality parameter 201 is below the first threshold 203 for a short period of time and then raises again above the first threshold 203. Consequently, the network analyzer 100 changes the observation period to be elongated resulting in observation period 208b (in addition to the observation period 208a). During the elongated observation period 208b, it is detected that a link quality parameter degradation occurs for a longer period of time. Therefore, the network analyzer 100 might be configured to implement further corrective actions only at moment 209, thus after the link quality parameter degradation remains for a predefined (here longer) timer period.

For example, the network analyzer 100 may take measures for improving one or more link quality parameters 201 responsive to detecting a degradation of the one or more link quality parameters 201. The network analyzer 100 may initiate elimination and/or reduction of root causes 205 of degradation of one or more link quality parameters 201. For example, the network analyzer 100 may take corrective actions or may cause other elements to take corrective actions such as, e.g., to increase the power of an optical amplifier etc., depending from the determined root cause 250 of the detected link quality parameter degradation and depending from the component 206 at which the root cause 205 is likely to be located.

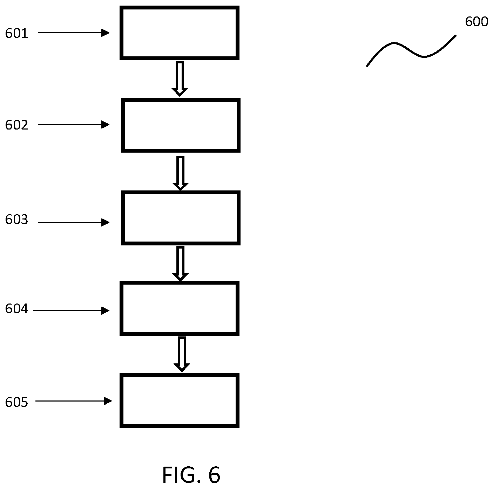

In exemplary embodiments, a method 600 is implemented which is partially illustrated in FIG. 6, wherein one or more of the steps of method 600 might be implemented consecutively or contemporaneously. In step 601, one or more respective pluralities of histogram values are retrieved, e.g., by the network analyzer 100 described above, from one or more Digital Signal Processing, DSP, units 101 of respective one or more Passive Optical Network, PON, transceivers 102. In step 602, one or more link quality parameters 201 from respective one or more predefined combinations of the one or more retrieved respective pluralities of histogram values are calculated. In step 603, the one or more calculated link quality parameters 201 are stored. In step 604, the one or more calculated link quality parameters 201 are compared with respective one or more previously determined link quality parameters. In step 605, a degradation of one or more of the one or more link quality parameters 201 is detected responsive to observing that a respective difference 202 between one or more of the one or more calculated link quality parameters 201 and the respective one or more previously determined link quality parameters 201 drops below a respective predetermined first threshold 203 and/or exceeds a respective predetermined second threshold.

In exemplary embodiments, method 600 is implemented by the network analyzer 100. In exemplary embodiments, features which have been described in the context of the network analyzer 100 might be implemented in the context of method 600 analogously. Method 600 may comprise taking one or more corrective actions responsive to detecting a degradation of one or more of the one or more link quality parameters 201, wherein taking one or more corrective actions comprises one or more of: determining one or more corrective actions, implementing one or more corrective actions, and/or causing one or more elements to implement the one or more corrective actions. Taking one or more corrective actions may comprise changing an observation 208a, 208b period responsive to detecting a degradation of one or more of the one or more link quality parameters 201. Taking one or more corrective actions may comprise taking measures for improving one or more link quality parameters 201 responsive to detecting a degradation of the one or more link quality parameters 201. Taking one or more corrective actions may comprise initiating elimination and/or reduction of root causes 205 of degradation of one or more link quality parameters 201. Detecting a degradation of the one or more link quality parameters 201 may comprise determining at which component 206 of the PON 500 a root cause 205 for the degradation of the one or more link quality parameters 201 is located with a predefined probability. The previously determined link quality parameters 201 may be one or more of previously calculated link quality parameters 201 and/or predefined lab parameters. Storing the one or more calculated link quality parameters 201 may comprise storing the one or more calculated link quality parameters 201 in one or more parameter matrices 200, where for one or more link quality parameter degradations one or more respective potential root causes 205 are indicated. Storing the one or more calculated link quality parameters 201 may further comprise storing the one or more previously determined link quality parameters 201 in one or more parameter matrices 200, and wherein a comparison between one or more calculated link quality parameters 201 and one or more corresponding previously determined link quality parameters 201, respectively, indicates changes of the respective one or more link quality parameters 201 over time. The one or more PON transceivers 102 may be located at respective one or more Optical Line Terminals, OLTs, 501 and/or at respective one or more Optical Network Units, ONUs 502. Calculating one or more link quality parameters 201 may comprise calculating one or more of: one or more link quality parameters 201 for one or more OLT-ONU links in the PON downstream direction, one or more link quality parameters 201 for one or more ONU-OLT links in the PON upstream direction, one or more link quality parameters 201 for one or more OLT ports of one or more linecards, one or more link quality parameters 201 for one or more linecards, one or more link quality parameters 201 for one or more chassis, one or more of the above link quality parameters 201 for an entire geographical area. The method 600 may be executed by a centralized network analyzer 100 located centralized at one OLT 501 or at a separate entity. The method 600 may be executed by a network analyzer 100 which is implemented decentralized (i.e., implemented in a distributed way), wherein one or more components 100a, 100b, 100c, 100d of the network analyzer 100 may be installed at one or more of: one or more OLTs 501 and one or more ONUs 502; or a separate entity and at least one of the one or more OLTs 501 and one or more ONUs 502. The method 600 may be executed by a decentralized network analyzer 100, wherein one or more components 100a, 100b, 100c, 100d of the network analyzer 100 are installed at one or more ONUs 502, and wherein the method 600 further comprises sending, by one or more components 100b, 100c, 100d of the network analyzer 100, one or more link quality parameters 201 calculated at the one or more ONUs 502 towards one or more components 100a of the network analyzer 100 for storing the one or more calculated link quality parameters 201 at one of the one or more OLTs 501 or at the separate entity via one or more Physical Layer Operation Administration and Maintenance, PLOAM, messages. In exemplary embodiments, executing the method 600 comprises using cloud technology. In exemplary embodiments, the method 600 is implemented in a self-learning manner, in particular by using Artificial Intelligence, AI.

In exemplary embodiments, a storage medium may be provided. The storage medium may be a computer readable storage medium. The computer readable storage medium may be a non-transitory computer readable storage medium. The computer readable storage medium may be a tangible computer readable storage medium. The computer readable storage medium may include instructions that when executed by a processor, e.g., a processor implemented by or within the above-described network analyzer 100, cause the processor (and optionally further components or elements of the network analyzer 100) to execute the above-described method 600.

Exemplary embodiments described herein provide the advantage of a cost-efficient solution for network analysis, wherein samples (histogram values) are retrieved during the operational state ("in-vivo") of DSP units and where based on these in-vivo measurements the functioning of PON components and/or PON links are analysed. Based on the determined root cause(s), actions to improve the link quality parameters can be taken.

Advantageously, the DSP unit allows to extract new parameters which contain information that was not accessible before. With that information, in comparison with standard analysing devices, a better network analyzer is built because more information promises a better/faster detection of malfunctions, a better/faster localization of the root cause, and more knobs for responsive action.

The proposed network analyzer is cheaper than evaluating the same parameters with standard measurement equipment used in the lab (sampling scope, real-time scope, etc.). In addition, those standard measurement equipments are not used as network analyzers for transceiver inspection.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it can be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing network nodes, BNGs, servers, ANs, CPEs, routers, or other network elements and/or hardware. Such existing hardware may be processing or control circuitry such as, but not limited to, one or more processors, one or more Central Processing Units (CPUs), one or more controllers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

Although a flow chart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium," "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine-readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks. For example, as mentioned above, according to one or more example embodiments, at least one memory may include or store computer program code, and the at least one memory and the computer program code may be configured to, with at least one processor, cause a network element or network device to perform the necessary tasks. Additionally, the processor, memory and example algorithms, encoded as computer program code, serve as means for providing or causing performance of operations discussed herein.

A code segment of computer program code may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

The terms "including" and/or "having," as used herein, are defined as comprising (i.e., open language). The term "coupled," as and if used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, components, devices or elements may be (or include) hardware, firmware, hardware executing software or any combination thereof. Such hardware may include processing or control circuitry such as, but not limited to, one or more processors, one or more CPUs, one or more controllers, one or more ALUs, one or more DSPs, one or more microcomputers, one or more FPGAs, one or more SoCs, one or more PLUs, one or more microprocessors, one or more ASICs, or any other device or devices capable of responding to and executing instructions in a defined manner.

Benefits, other advantages, and solutions to problems have been described above with regard to exemplary embodiments. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A network analyzer (100) comprising:
- means for retrieving one or more respective pluralities of histogram values from one or more Digital Signal Processing, DSP, units (101) of respective one or more Passive Optical Network, PON, transceivers (102) during an operational state of the one or more PON transceivers (102);
- means for calculating one or more link quality parameters (201) from respective one or more predefined combinations of the one or more retrieved respective pluralities of histogram values;
- means for storing the one or more calculated link quality parameters (201);
- means for comparing the one or more calculated link quality parameters (201) with respective one or more previously determined link quality parameters (201);
- means for detecting a degradation of one or more of the one or more link quality parameters (201) responsive to observing that a respective difference (202) between one or more of the one or more calculated link quality parameters (201) and the respective one or more previously determined link quality parameters (201) drops below a respective predetermined first threshold (203) and/or exceeds a respective predetermined second threshold.

2. The network analyzer (100) according to claim 1, further comprising:
- means for taking one or more corrective actions responsive to detecting a degradation of one or more of the one or more link quality parameters (201), wherein taking one or more corrective actions comprises one or more of:
- determining one or more corrective actions;
- implementing one or more corrective actions; and
- causing one or more elements to implement the one or more corrective actions.

3. The network analyzer (100) according to claim 2, wherein the means for taking one or more corrective actions is configured to change an observation period (208a, 208b) responsive to detecting a degradation of one or more of the one or more link quality parameters (201).

4. The network analyzer (100) according to claim 2, wherein the means for taking one or more corrective actions is configured to take measures for improving one or more link quality parameters (201) responsive to detecting a degradation of the one or more link quality parameters (201).

5. The network analyzer (100) according to claim 2, wherein the means for taking one or more corrective actions is configured to initiate elimination and/or reduction of root causes (205) of degradation of one or more link quality parameters (201).

6. The network analyzer (100) according to claim 1, wherein the means for detecting a degradation of the one or more link quality parameters (201) is configured to determine at which component (206) of the PON (500) a root cause (205) for the degradation of the one or more link quality parameters (201) is located with a predefined probability.

7. The network analyzer (100) according to claim 1, wherein the previously determined link quality parameters (201) are one or more of previously calculated link quality parameters (201) and/or predefined lab parameters.

8. The network analyzer (100) according to claim 1, wherein the means for storing the one or more calculated link quality parameters (201) is configured to store the one or more calculated link quality parameters (201) in one or more parameter matrices (200), where for one or more link quality parameter degradations one or more respective potential root causes (205) are indicated.

9. The network analyzer (100) according to claim 8, wherein the means for storing the one or more calculated link quality parameters (201) is further configured to store the one or more previously determined link quality parameters (201) in one or more parameter matrices (200), and wherein a comparison between one or more calculated link quality parameters (201) and one or more corresponding previously determined link quality parameters (201), respectively, indicates changes of the respective one or more link quality parameters (201) over time.

10. The network analyzer (100) according to claim 1, wherein the one or more PON transceivers (102) are located at respective one or more Optical Line Terminals, OLTs, (501) and/or at respective one or more Optical Network Units, ONUs (502).

11. The network analyzer (100) according to claim 1, wherein the means for calculating one or more link quality parameters (201) is configured to calculate one or more of:
- one or more link quality parameters (201) for one or more OLT-ONU links in the PON downstream direction,
- one or more link quality parameters (201) for one or more ONU-OLT links in the PON upstream direction,
- one or more link quality parameters (201) for one or more OLT ports of one or more linecards of one or more PONs (500),
- one or more link quality parameters (201) for one or more linecards of one or more chassis;
- one or more of the above link quality parameters (201) for an entire geographical area.

12. The network analyzer (100) according to claim 1, wherein the network analyzer (100) is implemented centralized at one OLT (501) or at a separate entity.

13. The network analyzer (100) according to claim 1, wherein the network analyzer (100) is implemented decentralized, wherein one or more components (100a, 100b, 100c, 100d) of the network analyzer (100) are installed at one or more of:
a) one or more OLTs (501) and one or more ONUs (502); or
b) a separate entity and at least one of the one or more OLTs (501) and one or more ONUs (502).

14. The network analyzer (100) according to claim 13, wherein one or more components (100a, 100b, 100c, 100d) of the network analyzer (100) are installed at one or more ONUs (502), and wherein the network analyzer (100) further comprising means for sending one or more link quality parameters (201) calculated at the one or more ONUs (502) towards the means for storing the one or more calculated link quality parameters (201) at one of the one or more OLTs (501) or at the separate entity via one or more Physical Layer Operation Administration and Maintenance, PLOAM, messages.

15. A method (600) comprising:
- retrieving (601) one or more respective pluralities of histogram values from one or more Digital Signal Processing, DSP, units (101) of respective one or more Passive Optical Network, PON, transceivers (102);
- calculating (602) one or more link quality parameters (201) from respective one or more predefined combinations of the one or more retrieved respective pluralities of histogram values;
- storing (603) the one or more calculated link quality parameters (201);
- comparing (604) the one or more calculated link quality parameters (201) with respective one or more previously determined link quality parameters (201);
- detecting (605) a degradation of one or more of the one or more link quality parameters (201) responsive to observing that a respective difference (202) between one or more of the one or more calculated link quality parameters (201) and the respective one or more previously determined link quality parameters (201) drops below a respective predetermined first threshold (203) and/or exceeds a respective predetermined second threshold.
